# FASCICULE DE BREVET EUROPEEN

(11) **EP 0 922 879 B1**
(45) Date de publication et mention de la délivrance du brevet: **02.04.2003**
(21) Numéro de dépôt: 98123557.5
(22) Date de dépôt: 10.12.1998
(51) Int. Cl.: F16F 15/139, F16F 15/133

(54) **Double volant amortisseur à dispositif élastique agissant axialement**
Zweimassenschwungrad mit einer axial operierenden, elastischen Vorrichtung
Double mass flywheel with axially acting elastic means

(30) Priorité: 11.12.1997 FR 9715709
(43) Date de publication de la demande: 16.06.1999
(73) Titulaire: VALEO EMBRAYAGES s.a.s., 80009 Amiens Cedex 1 (FR)
(72) Inventeur: Bonfilio, Ciriaco, 92110 Clichy (FR)
(74) Mandataire: Gamonal, Didier

(56) Documents cités:
- EP-A- 0 789 162
- DE-A- 3 742 794
- FR-A- 2 563 875
- FR-A- 2 756 343
- GB-A- 2 219 647
- US-A- 4 418 812

## Description

L'invention se rapporte à un double volant amortisseur, destiné notamment à filtrer les vibrations de rotation entre un moteur et un système de transmission, par exemple dans un véhicule automobile.

L'invention concerne plus particulièrement un double volant amortisseur comportant deux masses tournantes coaxiales liées en rotation par un dispositif élastique permettant entre elles un débattement angulaire à l'encontre d'un couple de rappel élastique, ledit dispositif élastique comprenant, d'une part, deux flasques affrontés et, d'autre part, un moyen d'écartement pour écarter axialement au moins une partie desdits flasques l'une de l'autre à l'encontre de moyens élastiques.

Un double volant de ce type est par exemple décrit dans la demande de brevet français déposée le 28 Novembre 1996 sous le numéro 96 14589 et qui n'appartient pas à l'état de la technique.

L'invention a pour but de réaliser un double volant selon le préambule de la revendications 1 qui permette un grand débattement, soit d'un coût pas trop élevé, fasse peu appel à des frottements mais qui, de plus, permette d'éviter la transmission de surcouples élevés.

Selon l'invention, un double volant amortisseur comportant deux masses tournantes coaxiales liées en rotation par un dispositif élastique permettant entre elles un débattement angulaire à l'encontre d'un couple de rappel élastique, ledit dispositif élastique comprenant, d'une part, deux flasques affrontés et, d'autre part, un moyen d'écartement pour écarter axialement au moins une partie desdits flasques l'une de l'autre à l'encontre de moyens élastiques, est caractérisé par le fait que lesdits flasques sont solidaires de l'une des masses, dite première masse, et le moyen d'écartement est solidaire de l'autre masse, dite seconde masse.

Avantageusement, le moyen d'écartement est constitué d'un bras radial dont une extrémité est solidarisée à la seconde masse et dont l'autre porte un patin s'étendant globalement circonférentiellement et ayant une tête qui, vue en coupe par un plan parallèle à l'axe du double volant, est en forme de coin ; la tête en forme de coin est constituée de deux rangées de paires de rouleaux, de diamètres décroissants, dont les axes s'étendent radialement et qui sont maintenus par une cage solidaire du bras radial, une rangée faisant face à l'un des flasques et l'autre rangée faisant face à l'autre flasque.

De préférence, le patin comporte une queue également en forme de coin s'étendant dans le prolongement de la tête du patin ; la queue en forme de coin est constituée de deux rangées de paires de rouleaux, de diamètres décroissants, maintenus par la cage des rouleaux de la tête ; la tête et la queue du patin sont symétriques par rapport à un plan passant par l'axe du double volant.

Avantageusement, chacun des deux flasques est constitué d'au moins une portion d'anneau, ledit anneau comportant une partie périphérique élastique de forme tronconique d'où s'étendent globalement radialement des doigts élastiques dont au moins les extrémités libres ont en coupe une forme tuilée ; deux doigts voisins sont circonférentiellement à distance l'un de l'autre ; deux doigts voisins se chevauchent circonférentiellement ; ledit anneau est en deux pièces, chacune des pièces comportant une partie périphérique de forme tronconique et des doigts, les deux pièces étant accolées l'une à l'autre par leur partie périphérique, les doigts d'une partie étant imbriqués dans les doigts de l'autre partie par un montage du type baïonnette ; l'une des pièces est en deux tronçons séparés circonférentiellement par un jeu s'étendant radialement, les doigts d'un tronçon étant tuilés dans un sens et les doigts de l'autre étant tuilés dans le sens contraire du précédent.

De préférence, chacun des deux flasques est un anneau complet s'étendant sur 360 degrés.

Selon une forme préférée, chacun des deux flasques est constitué de deux portions d'anneau et le moyen d'écartement comprend deux patins associés chacun à une portion d'anneau ; les deux portions et les deux patins sont disposés symétriquement par rapport à un plan passant par l'axe du double volant ; chaque portion s'étend circonférentiellement sur environ 150 degrés.

Avantageusement, le bras radial fait partie d'un voile annulaire ; le voile est constitué de deux disques dont la périphérie est déformée pour constituer un boîtier dans lequel est logé le patin.

De préférence, le boîtier présente des ouvertures d'où émergent les rouleaux.

Avantageusement, des pistes flexibles de forme annulaire sont disposées axialement entre les rouleaux et les flasques.

De préférence, les flasques et les patins du moyen d'écartement sont disposés dans une creusure de la première masse fermée partiellement par un couvercle ; les moyens élastiques agissent sur la partie médiane des flasques en prenant appui, d'une part, sur le fond de la creusure et, d'autre part, sur le couvercle ; en variante, les moyens élastiques agissent entre les deux flasques, à la périphérie de ceux-ci, les flasques étant par leur partie médiane articulés autour de cordons circonférentiels portés l'un par le fond de la creusure, l'autre par le couvercle.

Selon une forme préférée de réalisation, les moyens élastiques sont constitués d'au moins une rangée de plots élastiques répartis circonférentiellement ; les plots élastiques comportent un empilement de rondelles Belleville ; les plots sont supportés par une couronne ; les plots sont maintenus dans des trous de la couronne par élasticité radiale.

Avantageusement, c'est l'extrémité radialement intérieure du bras radial du moyen d'écartement qui est solidarisée à la seconde masse, l'extrémité extérieure dudit bras portant le patin.

De préférence, la première masse est la masse primaire.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est une vue partielle en coupe d'un double volant amortisseur selon l'invention ;
- la figure 2 est une vue en plan montrant le dispositif élastique du double volant amortisseur de la figure 1 ;
- la figure 3 est une vue, à plus grande échelle, d'un plot élastique, selon la flèche III de la figure 4 ;
- la figure 4 est une vue en coupe selon IV-IV de la figure 3 ;
- la figure 5 est une coupe transversale partielle passant par le centre du roulement, à l'échelle de la figure 1 ;
- la figure 6 est une vue analogue à la figure 5, les deux masses coaxiales étant déplacées angulairement l'une par rapport à l'autre ;
- la figure 7 est une vue à plus grande échelle d'un détail de la figure 6 ;
- la figure 8 est une demi-vue partielle en coupe d'une variante de double volant amortisseur selon l'invention ;
- la figure 9 est une vue analogue à la figure 8 montrant une autre variante de double volant amortisseur selon l'invention.

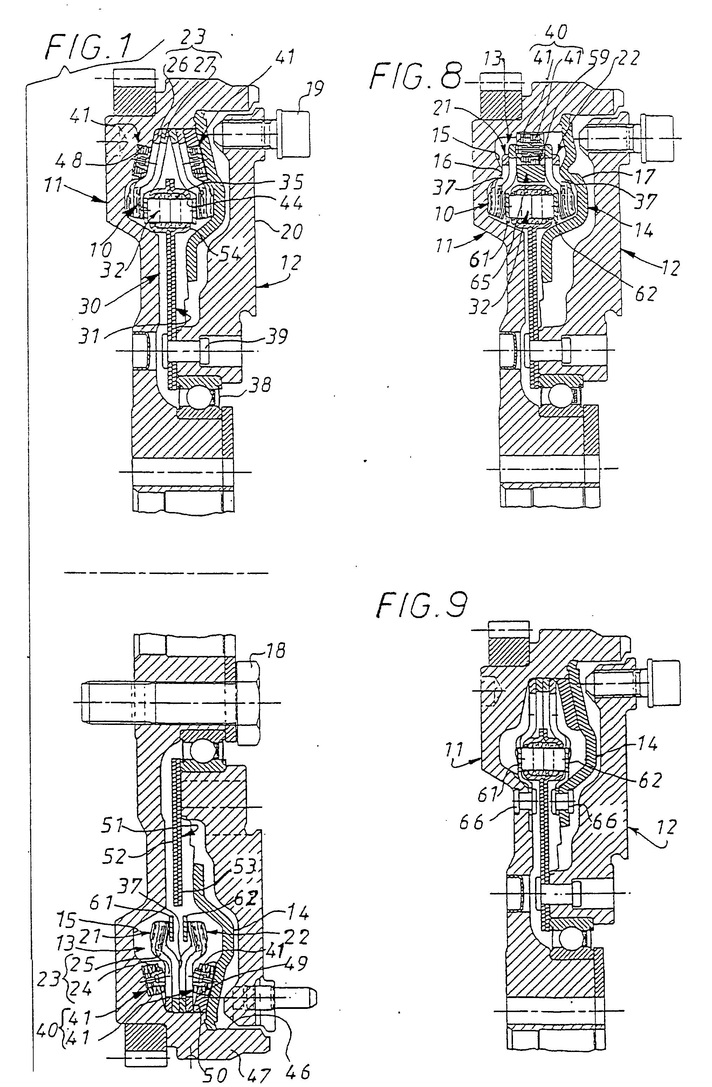

En se reportant à la figure 1, un double volant amortisseur comporte deux masses tournantes coaxiales, une première masse 11 et une seconde masse 12 ; la première masse 11 est la masse primaire qui, dans l'application à un véhicule automobile, est destinée à être reliée au vilebrequin du moteur du véhicule, ici par des vis 18 ; elle porte à sa périphérie externe la couronne de démarrage ; la seconde masse 12 est la masse secondaire destinée à être reliée au mécanisme d'embrayage dont le couvercle est solidarisé à la seconde masse 12 par des vis 19 ; la seconde masse 12 présente une face transversale externe 20 avec laquelle est amené à coopérer en frottement le disque de friction de l'embrayage et forme ainsi le plateau de réaction de l'embrayage.

Les deux masses 11 et 12 sont centrées et montées tournantes, relativement l'une à l'autre, grâce à un moyen de roulement 38, ici un roulement à billes.

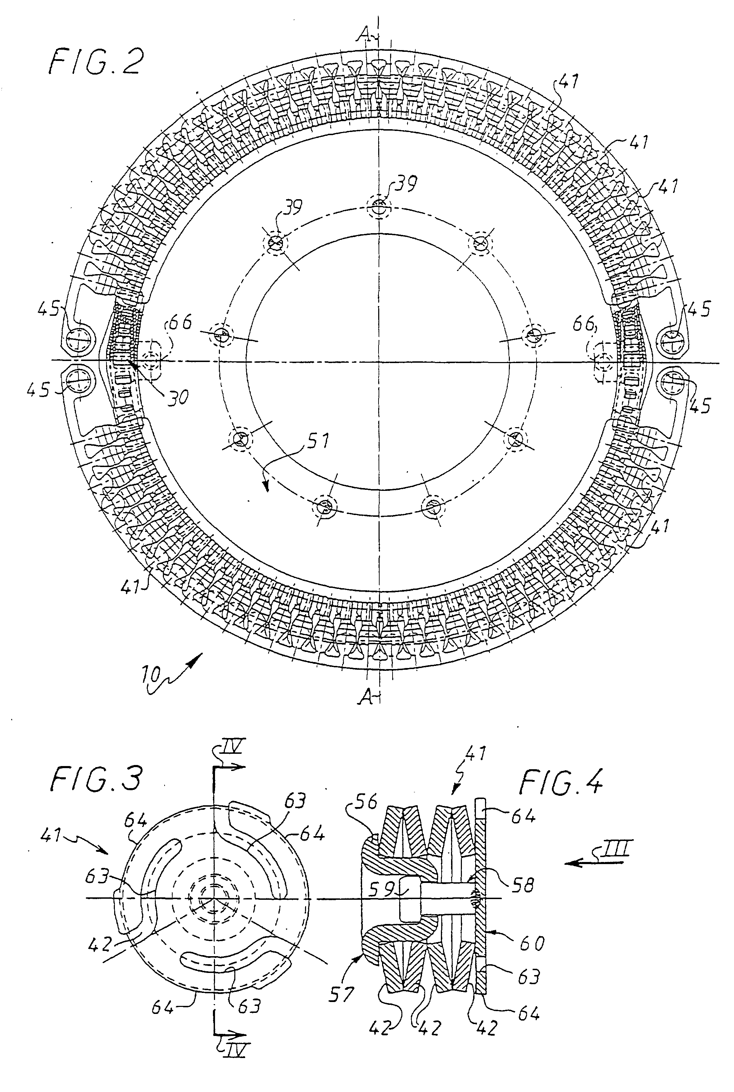

Les deux masses 11 et 12 sont liées en rotation par l'intermédiaire d'un dispositif élastique 10 visible également sur les figures 2 à 5.

Le dispositif élastique 10 comprend deux flasques 21, 22 affrontés et un moyen d'écartement 30 pour écarter axialement au moins une partie desdits flasques 21, 22 l'une de l'autre à l'encontre de moyens élastiques 40. Les flasques 21, 22 sont solidaires de l'une des masses, ici la masse primaire 11, et le moyen d'écartement 30 est solidaire de l'autre masse, ici donc la masse secondaire 12, de la manière décrite ci-dessous.

Le moyen d'écartement 30 est constitué d'un bras radial 31 dont une extrémité, ici l'extrémité interne, est solidarisée à la seconde masse 12, ici à la périphérie interne de celle-ci, par des rivets 39, et dont l'autre extrémité porte un patin 32 ; en fait ici le bras radial 31 fait partie d'un voile annulaire 51 constitué de deux disques 52, 53 accolés dont la périphérie externe est déformée pour constituer un boîtier 54 dans lequel est logé le patin 32.

Le patin 32 s'étend globalement circonférentiellement et présente une tête 33 qui, vue en coupe par un plan parallèle à l'axe du double volant, est en forme de coin.

La tête 33 en forme de coin, du patin 32, est constituée de deux rangées de paires de rouleaux 34 de diamètres décroissants dont les axes s'étendent radialement et qui sont maintenus par une cage 35 elle-même maintenue par le boîtier 54 qui présente des ouvertures 44 d'où émergent les rouleaux 34 ; ici, la tête 33 du patin 32 comporte quatre paires de rouleaux 34, les rouleaux de chaque paire étant disposés symétriquement par rapport à un plan transversal, perpendiculaire à l'axe du double volant ; une rangée de rouleaux 34 est destinée à faire face et à coopérer avec le flasque 21 et l'autre rangée à faire face et à coopérer avec le flasque 22. Ici, cette coopération aura lieu indirectement car des pistes flexibles 61, 62 de forme annulaire sont disposées axialement entre les rouleaux 34 et les flasques 21, 22 et c'est donc par leur intermédiaire que, dans les conditions décrites ci-dessous, le patin 32, avec sa tête 33 en forme de coin, est adapté à écarter axialement l'un de l'autre les flasques 21, 22 en pénétrant dans l'espace que ceux-ci limitent axialement.

Ici, cet écartement peut être effectué dans les deux sens du débattement angulaire relatif des deux masses 11 et 12 ; pour ce faire, le patin 32 comporte également une queue 36 en forme de coin s'étendant en prolongement de la tête 33 du patin 32 ; la queue 36 a ici la même constitution que la tête 33, la tête 33 et la queue 36 du patin 32 étant symétriques par rapport à un plan passant par l'axe du double volant et ayant en commun la paire de rouleaux 34 de plus grand diamètre qui est en position centrale.

Chacun des deux flasques 21, 22 est constitué, figure 1, d'une portion d'anneau 23, lequel comporte une partie périphérique 24 élastique de forme tronconique d'où s'étendent globalement radialement des doigts 25 élastiques dont les extrémités libres ont en coupe une forme tuilée.

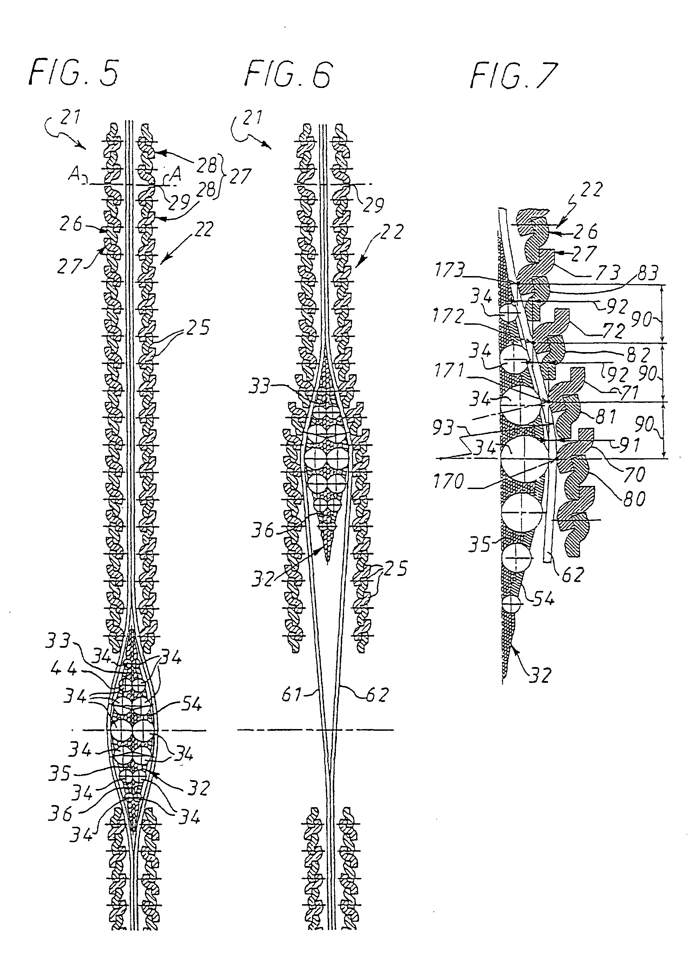

Plus précisément, dans la forme de réalisation représentée, l'anneau 23 est en deux pièces 26, 27, chacune des pièces comportant une partie périphérique de forme tronconique et des doigts ; les deux pièces 26, 27 sont accolées l'une à l'autre par leur partie périphérique, les doigts d'une partie étant imbriqués dans les doigts de l'autre partie par un montage du type baïonnette ; pour ce faire, deux doigts voisins d'une même pièce sont circonférentiellement à distance l'un de l'autre et, comme le montre en particulier la figure 5, les extrémités libres de forme tuilée, qui s'apparente à un S, des doigts d'une partie, ici la partie 26, ont une section en S plus couché que celui de la section des extrémités libres de l'autre partie, ici donc la partie 27.

En variante non représentée, l'anneau 23 n'est constitué que d'une seule pièce dont deux doigts voisins se chevauchent circonférentiellement.

L'anneau 23 peut être un anneau complet s'étendant sur 360 degrés ; ici, chacun des deux flasques 21, 22 est constitué de deux portions d'anneau disposées symétriquement par rapport à un plan passant par l'axe du double volant, chaque portion s'étendant circonférentiellement sur environ 150 degrés et étant empêchée de tourner par rapport à la masse primaire 11 par des vis qui traversent des trous 45 qu'elle présente à chacune de ses extrémités.

Le moyen d'écartement 30 comprend deux patins 32 associés chacun à une portion d'anneau, les deux patins 32 étant disposés symétriquement par rapport à l'axe du double volant.

Les flasques 21, 22 et les patins 32 du moyen d'écartement 30 sont disposés dans une creusure 13 de la masse primaire 11 1 fermée partiellement par un couvercle 14 solidarisé à la masse primaire 11 par sa périphérie externe à la faveur d'un embrèvement 46 ménagé à la surface interne d'une jupe cylindrique 47 que comporte la masse primaire 11 à sa périphérie externe.

Ici, les moyens élastiques 40 sont constitués de plots élastiques 41 répartis circonférentiellement.

Chaque plot élastique 41 comporte, figures 3 et 4, un empilement de rondelles Belleville 42, ici quatre rondelles Belleville 42 montées en opposition, disposées entre le bord périphérique externe 56 d'une coupelle 57 ayant un fond par lequel elle est montée coulissante sur un axe 58 soudé à une plaque circulaire 60, perpendiculairement à celle-ci, et ayant une tête 59 limitant le débattement de la coupelle 57 dans le sens de l'éloignement par rapport à la plaque 60 ; des échancrures 63 s'étendant circulairement définissent à la périphérie de la plaque 60 des languettes 64 qui s'étendent circonférentiellement et sont élastiques radialement ; ici, trois languettes élastiques 64 sont prévues.

Les plots élastiques 41 agissent sur la partie médiane 37 des flasques 21, 22 ; une première rangée de plots élastiques 41 est disposée entre le fond 15 de la creusure 13 de la première masse 11 et le flasque 21 ; on préfère que chaque plot élastique 41 sont placé dans un trou borgne 48 cylindrique dans lequel il est maintenu élastiquement grâce à ses languettes élastiques 64, ceci pour faciliter le montage de l'ensemble du double volant ; une seconde rangée de plots élastiques 41 est disposée entre le couvercle 14 et le flasque 22 ; ici, les plots élastiques 41 côté couvercle 14 sont supportés par une couronne 50 munie de trous traversants 49 cylindriques où, là aussi, il sont maintenus élastiquement grâce à leurs languettes élastiques 64 le temps du montage de l'ensemble.

Le double volant amortisseur qui vient d'être décrit fonctionne comme suit .

Lorsque la seconde masse 12 se déplace par rapport à la première masse 11 sous l'effet par exemple d'une variation du couple transmis par le double volant, le voile annulaire 51 solidaire de la seconde masse 12 entraîne les patins 32 qui pénètrent entre les deux flasques 21, 22 qui sont eux solidaires de la première masse 11 ; cette pénétration des patins 32, illustrée partiellement sur la figure 6, s'effectue à l'encontre d'une certaine élasticité que présentent les doigts 25 des pièces annulaires 26, 27 et à l'encontre des moyens élastiques 40 constitués par les plots élastiques 41 ; ici, le dispositif élastique 10 est symétrique par rapport au plan A-A passant par l'axe du double volant ; ainsi, le fonctionnement de l'amortisseur est symétrique c'est-à-dire le même lorsque la seconde masse 12 se déplace dans un sens ou dans l'autre par rapport à la première masse 11, l'un des sens étant dit direct et l'autre rétro ; dès lors, le débattement angulaire des deux masses 11 et 12 peut être choisi voisin de cent cinquante degrés ; mais, bien entendu, si on le souhaite, il peut être plus petit et, comme dans la variante décrite ci-après, avoisiner les quatre-vingt dix degrés ; on notera également que dans un même encombrement défini par les première et seconde masses, il est possible, simplement en changeant les caractéristiques élastiques des flasques 21, 22 et/ou des plots élastiques 41, de réaliser différents double volants amortisseurs adaptés à différents couples, donc à différents moteurs.

Il est possible également en jouant sur le positionnement des plots élastiques 41 d'obtenir différentes courbes d'amortissement en fonction du débattement angulaire ; ainsi, en rapprochant progressivement les plots élastiques 41, en fonction de leur position angulaire, de l'axe du double volant, on peut faire varier progressivement le bras de levier de l'effort auquel ils soumettent les doigts 25 des flasques 21, 22 et obtenir une courbe d'amortissement progressivement croissante ; comme on peut le voir sur la figure 2, les plots élastiques 41 ne sont pas situés selon un cercle centré sur l'axe du double volant mais, de la position d'origine qui correspond à l'équilibre des masses au repos jusqu'au plan A-A, les plots élastiques 41 se rapprochent légèrement et progressivement de l'axe du double volant.

Il est à noter que, comme le montre la figure 6, lors de la pénétration des patins 32, plus exactement ici de la tête 33 des patins 32, les doigts 25 ne se referment pas derrière les patins 32 grâce à la forme des doigts 25 qui à partir d'un certain déplacement axial se soutiennent les uns les autres ; grâce à cette disposition, comme les patins 32 ont une queue 36 symétrique de la tête 33 pour les besoins d'un fonctionnement symétrique dans le sens direct et dans le sens rétro évoqué ci-dessus, on évite qu'en se refermant sur la queue 36 les doigts 25 ne viennent annuler l'effort nécessaire à la pénétration de la tête 33 générateur d'amortissement.

La demi-vue partielle selon la figure 7 montre en détail comment s'effectue la pénétration d'un patin 32.

Le flasque 22 étant constitué de deux pièces d'anneau 26, 27 imbriquées par un montage du type baïonnette, les doigts fonctionnent par paires ; pour les besoins de la description, on a désigné certains des doigts de la pièce d'anneau 27 par les références 70, 71, 72, 73 et les doigts associés de la pièce d'anneau 26 par les références 80, 81, 82, 83, lesdites paires étant ici constituées par les couples de doigts 70-80, 71-81, 72-82 et 73-83, respectivement.

On voit que la forme plus couchée des doigts 80 à 83, par rapport à celle des doigts 70 à 73, leur permet d'être soutenus par les doigts 70 à 73 après passage du patin 32 ; les doigts 70 à 73 sont répartis circonférentiellement selon un pas 90 ; les doigts 80 à 83 sont bien entendu répartis selon le même pas ; si l'on désigne par 170, 171, 172 et 173 les points de contact des doigts 70 à 73, respectivement, avec la piste flexible 62, on voit que le doigt 70 est au contact de la piste flexible 62 au droit du sommet du rouleau 34 en position centrale et n'exerce donc pas d'effort de rejet du patin 32 ; le point de contact 171 du doigt 71 est à une distance axiale 91 du point de contact 170 du doigt 70 ; le point de contact 172 du doigt 72 est axialement à égale distance du point de contact 171, du doigt 71, et du point de contact 173, du doigt 73, laquelle distance 92 est supérieure à la distance 91 ; de bons résultats ont été obtenus avec une distance 92 égale au double de la distance 91. La géométrie et les dimensions des différents éléments sont telles que la déformée de la piste flexible est une droite, inclinée d'un angle de l'ordre de 15 degrés par rapport à un plan transversal, raccordée à un arc de cercle de rayon 93 ; trois couples de doigts, ici 71-81, 72-82 et 73-83, sont toujours en action ; grâce à ces dispositions, l'effort de pénétration du patin 32 mesuré transversalement est pratiquement égal à l'effort axial développé par les doigts.

On a vu jusqu'ici que les doigts étaient conformés en sorte qu'ils agissaient individuellement successivement lors de la pénétration des patins 32 ; on peut s'arranger pour qu'il en soit autrement, notamment pour que successivement les actions des doigts s'ajoutent progressivement ; il suffit pour cela que l'une des pièces, ici la pièce 27, de chacun des flasques 21, 22, comme visible sur la figure 5, soit constituée de deux tronçons 28 séparés circonférentiellement par un jeu 29 radial, ici au droit du plan A-A, les doigts du tronçon 28 placé au delà du plan A-A dans le sens direct étant tuilés dans le sens inverse de celui dans lequel sont tuilés les doigts du tronçon 28 placé en deçà du plan A-A ; dès lors, lorsque les patins 32 pénètrent entre les deux flasques 21, 22 au delà du plan A-A, l'effort à vaincre pour poursuivre cette pénétration est très important du fait que les actions des doigts, attelés les uns aux autres, s'ajoutent successivement ; on vient donc de réaliser de façon simple un limiteur de couple élastique pratiquement pas sujet à usure comparativement aux limiteurs de couple réalisés jusqu'ici en général à frottement.

Selon la variante de la figure 8, les moyens élastiques 40 agissent entre les deux flasques 21, 22 à la périphérie externe de ceux-ci tandis que la partie médiane 37 desdits flasques 21, 22 est montée à articulation autour de cordons circonférentiels 16, 17 portés l'un 16 par le fond 15 de la creusure 13 de la première masse 11, l'autre 17 par le couvercle 14. Ici, les moyens élastiques 40 sont constitués d'une rangée de paires de plots élastiques 41, tels que décrits ci-dessus, disposés en série dans des échancrures circulaires 59 ménagées à la périphérie d'une couronne 65 centrale disposée entre les deux flasques 21, 22 et extérieurement par rapport aux patins 32.

Jusqu'ici, les rouleaux 34 des patins 32 coopèrent avec les flasques 21, 22 par l'intermédiaire des pistes flexibles 61, 62 montées flottantes entre ceux-ci ; selon la variante de la figure 9, les pistes flexibles 61, 62 sont solidarisées, par des rivets 66, l'une 61 à la première masse 11, l'autre 62 au couvercle 14 ; ces rivets 66 traversent des trous ménagés dans des pattes radiales que présentent les pistes flexibles 61, 62, comme montré en traits mixtes sur la figure 2.

En plus des avantages déjà cités ci-dessus, le double volant selon l'invention, dont la majeure partie des constituants du dispositif élastique 10 est portée par la masse primaire 11, permet d'augmenter l'inertie de cette masse primaire 11 ; de plus, ce dispositif élastique 10 étant essentiellement disposé à la périphérie externe de l'espace existant entre les masses primaire 11 et secondaire 12, il est possible de prévoir un moyen de roulement 38 de n'importe quel diamètre, choisi en fonction des applications.

Par ailleurs, en jouant sur la nature des matériaux constituant notamment les rouleaux 34 et les pistes flexibles 61, il est possible d'introduire dans l'amortissement un frottement maîtrisé se traduisant par une certaine hystérésis dans le fonctionnement de l'amortisseur : ceci évite d'avoir à introduire des rondelles de frottement et d'application dans le double volant amortisseur, comme cela se fait jusqu'ici.

## Revendications

1. Double volant amortisseur comportant deux masses tournantes (11,12) coaxiales liées en rotation par un dispositif élastique (10) permettant entre elles un débattement angulaire à l'encontre d'un couple de rappel élastique, ledit dispositif élastique (10) comprenant, d'une part, deux flasques (21,22) affrontés et, d'autre part, un moyen d'écartement (30) pour écarter axialement au moins une partie desdits flasques (21,22) l'une de l'autre à l'encontre de moyens élastiques (40), **caractérisé par le fait que** lesdits flasques (21, 22) sont solidaires de l'une (11) des masses, dite première masse, et le moyen d'écartement (30) est solidaire de l'autre (12) masse, dite seconde masse.

2. Double volant amortisseur selon la revendication 1, **caractérisé par le fait que** le moyen d'écartement (30) est constitué d'un bras radial (31) dont une extrémité est solidarisée à la seconde masse (12) et dont l'autre porte un patin (32) s'étendant globalement circonférentiellement et ayant une tête (33) qui, vue en coupe par un plan parallèle à l'axe du double-volant, est en forme de coin.

3. Double volant amortisseur selon la revendication 2, **caractérisé par le fait que** la tête (33) en forme de coin est constituée de deux rangées de paires de rouleaux (34), de diamètres décroissants, dont les axes s'étendent radialement et qui sont maintenus par une cage (35) solidaire du bras radial (31), une rangée faisant face à l'un des flasques (21,22) et l'autre rangée faisant face à l'autre flasque (22,21).

4. Double volant amortisseur selon l'une des revendications 2 ou 3, **caractérisé par le fait que** le patin (32) comporte une queue (36) également en forme de coin s'étendant dans le prolongement de la tête (33) du patin (32).

5. Double volant amortisseur selon la revendication 4, **caractérisé par le fait que** la queue (36) en forme de coin est constituée de deux rangées de paires de rouleaux (34), de diamètres décroissants, maintenus par la cage (35) des rouleaux (34) de la tête (33).

6. Double volant amortisseur selon la revendication 5, **caractérisé par le fait que** la tête (33) et la queue (36) du patin (32) sont symétriques par rapport à un plan passant par l'axe du double-volant.

7. Double volant amortisseur selon l'une des revendications 1 à 6, **caractérisé par le fait que** chacun des deux flasques (21, 22) est constitué d'au moins une portion d'anneau (23), ledit anneau (23) comportant une partie périphérique (24) élastique de forme tronconique d'où s'étendent globalement radialement des doigts (25) élastiques dont au moins les extrémités libres ont en coupe une forme tuilée.

8. Double volant amortisseur selon la revendication 7, **caractérisé par le fait que** deux doigts (25) voisins sont circonférentiellement à distance l'un de l'autre.

9. Double volant amortisseur selon la revendication 7, **caractérisé par le fait que** deux doigts (25) voisins se chevauchent circonférentiellement.

10. Double volant amortisseur selon la revendication 9, **caractérisé par le fait que** ledit anneau (23) est en deux pièces (26, 27), chacune des pièces comportant une partie périphérique de forme tronconique et des doigts, les deux pièces étant accolées l'une à l'autre par leur partie périphérique, les doigts d'une partie étant imbriqués dans les doigts de l'autre partie par un montage du type baïonnette.

11. Double volant amortisseur selon la revendication 10, **caractérisé par le fait que** l'une (27) des pièces est en deux tronçons (28) séparés circonférentiellement par un jeu (29) s'étendant radialement, les doigts d'un tronçon étant tuilés dans un sens et les doigts de l'autre étant tuilés dans le sens contraire du précédent.

12. Double volant amortisseur selon l'une des revendications 7 à 11, **caractérisé par le fait que** l'anneau est un anneau complet s'étendant sur 360 degrés.

13. Double volant amortisseur selon l'une des revendications 7 à 11, **caractérisé par le fait que** chacun des deux flasques (21, 22) est constitué de deux portions d'anneau (23) et le moyen d'écartement (30) comprend deux patins (32) associés chacun à une portion d'anneau (23).

14. Double volant amortisseur selon la revendication 13, **caractérisé par le fait que** les deux portions (23) et les deux patins (32) sont disposés symétriquement par rapport à un plan passant par l'axe du double volant.

15. Double volant amortisseur selon l'une des revendications 13 ou 14, **caractérisé par le fait que** chaque portion (23) s'étend circonférentiellement sur environ 150 degrés.

16. Double volant amortisseur selon l'une des revendications 2 à 15, **caractérisé par le fait que** le bras radial (31) fait partie d'un voile annulaire (51).

17. Double volant amortisseur selon la revendication 16, **caractérisé par le fait que** le voile (51) est constitué de deux disques (52,53) dont la périphérie est déformée pour constituer un boîtier (54) dans lequel est logé le patin (32).

18. Double volant amortisseur selon les revendications 3 et 17, prises indépendamment en combinaison, **caractérisé par le fait que** le boîtier (54) présente des ouvertures (44) d'où émergent les rouleaux (34).

19. Double volant amortisseur selon l'une des revendications 3 à 18, **caractérisé par le fait que** des pistes flexibles (61,62) de forme annulaire sont disposées axialement entre les rouleaux (34) et les flasques (21, 22).

20. Double volant amortisseur selon l'une des revendications 1 à 19, **caractérisé par le fait que** les flasques (21, 22) et les patins (32) du moyen d'écartement (30) sont disposés dans une creusure (13) de la première masse (11) fermée partiellement par un couvercle (14).

21. Double volant amortisseur selon la revendication 20, **caractérisé par le fait que** les moyens élastiques (40) agissent sur la partie médiane (37) des flasques (21, 22) en prenant appui, d'une part, sur le fond (15) de la creusure (13) et, d'autre part, sur le couvercle (14).

22. Double volant amortisseur selon la revendication 20, **caractérisé par le fait que** les moyens élastiques (40) agissent entre les deux flasques (21,22) à la périphérie de ceux-ci, les flasques (21, 22) étant par leur partie médiane (37) articulés autour de cordons (16,17) circonférentiels portés l'un (16) par le fond (15) de la creusure (13), l'autre (17) par le couvercle (14).

23. Double volant amortisseur selon l'une des revendications 20 à 22, **caractérisé par le fait que** les moyens élastiques (40) sont constitués d'au moins une rangée de plots élastiques (41) répartis circonférentiellement.

24. Double volant amortisseur selon la revendication 23, **caractérisé par le fait que** les plots élastiques (41) comportent un empilement de rondelles Belleville (42).

25. Double volant amortisseur selon l'une des revendications 23 ou 24, **caractérisé par le fait que** les plots (41) sont supportés par une couronne (50).

26. Double volant amortisseur selon la revendication 25, **caractérisé par le fait que** les plots (41) sont maintenus dans des trous (49) de la couronne (50) par élasticité radiale (43).

27. Double volant amortisseur selon l'une des revendications 2 à 26, **caractérisé par le fait que** c'est l'extrémité radialement intérieure du bras radial (31) du moyen d'écartement (30) qui est solidarisée à la seconde masse (12), l'extrémité extérieure dudit bras (31) portant le patin (32).

28. Double volant amortisseur selon l'une des revendications 1 à 27, **caractérisé par le fait que** la première masse (11) est la masse primaire.

## Claims

1. Double mass damper flywheel comprising two coaxial turning masses (11, 12) linked in rotation by an elastic device (10) that allows an angular deflection between them against an elastic restoring torque, the said elastic device (10) comprising, on the one hand, two facing flanges (21, 22) and, on the other hand, a spreading means (30) for spreading apart at least part of the said flanges (21, 22) from each other axially against elastic means (40), **characterised by** the fact that the said flanges (21, 22) are firmly attached to one (11) of the masses, referred to as the first mass, and the spreading means (30) is firmly attached to the other (12) mass, referred to as the second mass.

2. Double mass damper flywheel according to Claim 1, **characterised by** the fact that the spreading means (30) is formed by a radial arm (31), one end of which is firmly attached to the second mass (12) and the other end of which carries a shoe (32) extending generally circumferentially and having a head (33) which is in the form of a wedge when viewed in section in a plane parallel to the axis of the double mass flywheel.

3. Double mass damper flywheel according to Claim 2, **characterised by** the fact that the wedge-shaped head (33) is made up of two rows of paired rollers (34) of decreasing diameters, the axes of which extend radially and which are retained by a cage (35) firmly attached to the radial arm (31), one row facing one of the flanges (21, 22) and the other row facing the other flange (22, 21).

4. Double mass damper flywheel according to either of Claims 2 and 3, **characterised by** the fact that the shoe (32) comprises a tail (36), which is likewise wedge-shaped, extending as an extension of the head (33) of the shoe (32).

5. Double mass damper flywheel according to Claim 4, **characterised by** the fact that the wedge-shaped tail (36) is formed by two rows of paired rollers (34) of decreasing diameter retained by the cage (35) of the rollers (34) of the head (33).

6. Double mass damper flywheel according to Claim 5, **characterised by** the fact that the head (33) and the tail (36) of the shoe (32) are symmetrical with respect to a plane passing through the axis of the double mass flywheel.

7. Double mass damper flywheel according to one of Claims 1 to 6, **characterised by** the fact that each of the two flanges (21, 22) is made up of at least one ring portion (23), the said ring (23) comprising a frustoconical elastic peripheral part (24), from which there extend in a generally radial direction elastic fingers (25), at least the free ends of which are tiled in section.

8. Double mass damper flywheel according to Claim 7, **characterised by** the fact that two adjacent fingers (25) are spaced apart circumferentially.

9. Double mass damper flywheel according to Claim 7, **characterised by** the fact that two adjacent fingers (25) overlap circumferentially.

10. Double mass damper flywheel according to Claim 9, **characterised by** the fact that the said ring (23) is in two pieces (26, 27), each of the pieces comprising a frustoconical peripheral part and fingers, the two pieces being joined to each other by their peripheral part, the fingers on one part interlocking with the fingers on the other part by means of a bayonet-type fit.

11. Double mass damper flywheel according to Claim 10, **characterised by** the fact that one (27) of the pieces is in two sections (28) separated circumferentially by a radial clearance (29), the fingers of one section being tiled in one direction and the fingers of the other being tiled in the opposite direction to the above.

12. Double mass damper flywheel according to one of Claims 7 to 11, **characterised by** the fact that the ring is a continuous ring extending over 360 degrees.

13. Double mass damper flywheel according to one of Claims 7 to 11, **characterised by** the fact that each of the two flanges (21, 22) is made up of two ring portions (23) and the spreading means (30) comprises two shoes (32), each associated with one ring portion (23).

14. Double mass damper flywheel according to Claim 13, **characterised by** the fact that the two portions (23) and the two shoes (32) are arranged symmetrically with respect to a plane passing through the axis of the double mass flywheel.

15. Double mass damper flywheel according to either of Claims 13 and 14, **characterised by** the fact that each portion (23) extends circumferentially over about 150 degrees.

16. Double mass damper flywheel according to one of Claims 2 to 15, **characterised by** the fact that the radial arm (31) forms part of an annular web (51).

17. Double mass damper flywheel according to Claim 16, **characterised by** the fact that the web (51) is made up of two discs (52, 53), the periphery of which is deformed to form a housing (54), in which the shoe (32) is accommodated.

18. Double mass damper flywheel according to Claims 3 and 17, taken independently and in combination, **characterised by** the fact that the housing (54) has openings (44), from which the rollers (34) emerge.

19. Double mass damper flywheel according to one of Claims 3 to 18, **characterised by** the fact that annular flexible tracks (61, 62) are arranged axially between the rollers (34) and the flanges (21, 22).

20. Double mass damper flywheel according to one of Claims 1 to 19, **characterised by** the fact that the flanges (21, 22) and the shoes (32) of the spreading means (30) are arranged in a cavity (13) in the first mass (11), the cavity being partially closed by a cover (14).

21. Double mass damper flywheel according to Claim 20, **characterised by** the fact that the elastic means (40) act on the central part (37) of the flanges (21, 22), while bearing on the base (15) of the cavity (13), on the one hand, and on the cover (14) on the other.

22. Double mass damper flywheel according to Claim 20, **characterised by** the fact that the elastic means (40) act between the two flanges (21, 22), at the periphery of the latter, the flanges (21, 22) being articulated by their central part (37) about circumferential beads (16, 17), one (16) borne by the base (15) of the cavity (13) and the other (17) by the cover (14).

23. Double mass damper flywheel according to one of Claims 20 to 22, **characterised by** the fact that the elastic means (40) are made up of at least one row of circumferentially distributed elastic studs (41).

24. Double mass damper flywheel according to Claim 23, **characterised by** the fact that the elastic studs (41) comprise a stack of Belleville washers (42).

25. Double mass damper flywheel according to either of Claims 23 and 24, **characterised by** the fact that the studs (41) are supported by a ring (50).

26. Double mass damper flywheel according to Claim 25, **characterised by** the fact that the studs (41) are retained in holes (49) in the ring (50) by radial elasticity (43).

27. Double mass damper flywheel according to one of Claims 2 to 26, **characterised by** the fact that it is the radially inner end of the radial arm (31) of the spreading means (30) which is firmly attached to the second mass (12), the outer end of the said arm (31) carrying the shoe (32).

28. Double mass damper flywheel according to one of Claims 1 to 27, **characterised by** the fact that the first mass (11) is the primary mass.

## Patentansprüche

1. Zweimassen-Dämpfungsschwungrad mit zwei rotierenden koaxialen Schwungmassen (11, 12), die durch eine elastische Vorrichtung (10) drehfest miteinander verbunden sind, die zwischen ihnen eine Winkelauslenkung entgegen einem elastischen Rückstellmoment ermöglicht. wobei die besagte elastische Vorrichtung (10) einerseits zwei gegenüberliegende Flansche (21, 22) und andererseits ein Beabstandungsmittel (30) umfasst, um wenigstens einen Teil der besagten Flansche (21, 22) entgegen elastischen Mitteln (40) axial voneinander zu entfernen, **dadurch gekennzeichnet, dass** die besagten Flansche (21, 22) fest mit einer der Schwungmassen (11), die als erste Schwungmasse bezeichnet wird, verbunden sind und das Beabstandungsmittel (30) fest mit der als zweite Schwungmasse bezeichneten anderen Schwungmasse (12) verbunden ist.

2. Zweimassen-Dämpfungsschwungrad nach Anspruch 1, **dadurch gekennzeichnet, dass** das Beabstandungsmittel (30) aus einem radialen Arm (31) besteht, von dem ein Ende fest mit der zweiten Schwungmasse (12) verbunden ist und dessen anderes Ende ein Segment (32) trägt, das sich insgesamt umfangsmäßig erstreckt und einen Kopf (33) besitzt, der, im Schnitt durch eine zur Achse des Zweimassenschwungrads parallele Ebene betrachtet, keilförmig ausgebildet ist.

3. Zweimassen-Dämpfungsschwungrad nach Anspruch 2, **dadurch gekennzeichnet, dass** der keilförmige Kopf (33) aus zwei Reihen von Rollenpaaren (34) mit abnehmenden Durchmessern besteht, deren Achsen sich radial erstrecken und die durch einen fest mit dem radialen Arm (31) verbundenen Käfig (35) gehalten werden, wobei eine Reihe einem der Flansche (21, 22) gegenüberliegt und die andere Reihe dem anderen Flansch (22, 21) gegenüberliegt.

4. Zweimassen-Dämpfungsschwungrad nach einem der Ansprüche 2 oder 3, **dadurch gekennzeichnet, dass** das Segment (32) ein ebenfalls keilförmiges Endstück (36) umfasst, das sich in der Verlängerung des Kopfes (33) des Segments (32) erstreckt.

5. Zweimassen-Dämpfungsschwungrad nach Anspruch 4, **dadurch gekennzeichnet, dass** das keilförmige Endstück (36) aus zwei Reihen von Rollenpaaren (34) mit abnehmenden Durchmessern besteht, die durch den Käfig (35) der Rollen (34) des Kopfes (33) gehalten werden.

6. Zweimassen-Dämpfungsschwungrad nach Anspruch 5, **dadurch gekennzeichnet, dass** der Kopf (33) und das Endstück (36) des Segments (32) symmetrisch bezogen auf eine durch die Achse des Zweimassenschwungrads verlaufende Ebene angeordnet sind.

7. Zweimassen-Dämpfungsschwungrad nach einem der Ansprüche 1 bis 6, **dadurch gekennzeichnet, dass** jeder der beiden Flansche (21, 22) aus wenigstens einem Ringabschnitt (23) besteht, wobei der besagte Ring (23) einen kegelstumpfförmigen elastischen Umfangsteil (24) umfasst, von dem aus sich elastische Finger (25) insgesamt radial erstrecken, von denen wenigstens die freien Enden im Schnitt dachziegelförmig ausgebildet sind.

8. Zweimassen-Dämpfungsschwungrad nach Anspruch 7, **dadurch gekennzeichnet, dass** zwei benachbarte Finger (25) umfangsmäßig in einem Abstand zueinander angeordnet sind.

9. Zweimassen-Dämpfungsschwungrad nach Anspruch 7, **dadurch gekennzeichnet, dass** zwei benachbarte Finger (25) umfangsmäßig übereinandergreifen.

10. Zweimassen-Dämpfungsschwungrad nach Anspruch 9, **dadurch gekennzeichnet, dass** der besagte Ring (23) aus zwei Teilen (26, 27) besteht, wobei jeder der Teile einen kegelstumpfförmigen Umfangsteil und Finger umfasst und wobei die beiden Teile durch ihren Umfangsteil aneinander angefügt sind und die Finger eines Teils durch eine Bajonettverbindung mit den Fingern des anderen Teils verzahnt sind.

11. Zweimassen-Dämpfungsschwungrad nach Anspruch 10, **dadurch gekennzeichnet, dass** eines der Teile (27) aus zwei Teilstücken (28) besteht, die umfangsmäßig durch ein Spiel (29) getrennt sind, das sich radial erstreckt, wobei die Finger eines Teilstücks in einer Richtung dachziegelförmig ausgebildet sind, während die Finger des anderen Teilstücks in der entgegengesetzten Richtung dachziegelförmig ausgebildet sind.

12. Zweimassen-Dämpfungsschwungrad nach einem der Ansprüche 7 bis 11, **dadurch gekennzeichnet, dass** der Ring ein vollständiger Ring ist, der sich auf 360 Grad erstreckt.

13. Zweimassen-Dämpfungsschwungrad nach einem der Ansprüche 7 bis 11, **dadurch gekennzeichnet, dass** jeder der beiden Flansche (21, 22) aus zwei Ringabschnitten (23) besteht und das Beabstandungsmittel (30) zwei jeweils mit einem Ringabschnitt (23) verbundene Segmente (32) umfasst.

14. Zweimassen-Dämpfungsschwungrad nach Anspruch 13, **dadurch gekennzeichnet, dass** die beiden Abschnitte (23) und die beiden Segmente (32) symmetrisch bezogen auf eine durch die Achse des Zweimassenschwungrads verlaufende Ebene angeordnet sind.

15. Zweimassen-Dämpfungsschwungrad nach einem der Ansprüche 13 oder 14, **dadurch gekennzeichnet, dass** sich jeder Abschnitt (23) umfangsmäßig auf etwa 150 Grad erstreckt.

16. Zweimassen-Dämpfungsschwungrad nach einem der Ansprüche 2 bis 15, **dadurch gekennzeichnet, dass** der radiale Arm (31) zu einer ringförmigen Flachscheibe (51) gehört.

17. Zweimassen-Dämpfungsschwungrad nach Anspruch 16, **dadurch gekennzeichnet, dass** die Flachscheibe (51) aus zwei Scheiben (52, 53) besteht, deren Umfang verformt ist, um ein Gehäuse (54) zu bilden, in dem das Segment (32) gelagert ist.

18. Zweimassen-Dämpfungsschwungrad nach den Ansprüchen 3 und 17, unabhängig in Kombination genommen, **dadurch gekennzeichnet, dass** das Gehäuse (54) Öffnungen (44) aufweist, aus denen die Rollen (34) hervortreten.

19. Zweimassen-Dämpfungsschwungrad nach einem der Ansprüche 3 bis 18, **dadurch gekennzeichnet, dass** ringförmige biegsame Bahnen (61, 62) axial zwischen den Rollen (34) und den Flanschen (21, 22) angeordnet sind.

20. Zweimassen-Dämpfungsschwungrad nach einem der Ansprüche 1 bis 19, **dadurch gekennzeichnet, dass** die Flansche (21, 22) und die Segmente (32) des Beabstandungsmittels (30) in einer teilweise durch einen Deckel (14) verschlossenen Einsenkung (13) der ersten Schwungmasse (11) angeordnet sind.

21. Zweimassen-Dämpfungsschwungrad nach Anspruch 20, **dadurch gekennzeichnet, dass** die elastischen Mittel (40) auf den Mittelteil (37) der Flansche (21, 22) einwirken, indem sie einerseits auf dem Boden (15) der Einsenkung (13) und andererseits auf dem Deckel (14) zur Anlage kommen.

22. Zweimassen-Dämpfungsschwungrad nach Anspruch 20, **dadurch gekennzeichnet, dass** die elastischen Mittel (40) zwischen den beiden Flanschen (21, 22), an deren Umfang, wirken, wobei die Flansche (21, 22) durch ihren Mittelteil (37) um Umfangsstege (16, 17) herum angelenkt sind, von denen einer (16) am Boden (15) der Einsenkung (13) und der andere (17) am Deckel (14) angebracht ist.

23. Zweimassen-Dämpfungsschwungrad nach einem der Ansprüche 20 bis 22, **dadurch gekennzeichnet, dass** die elastischen Mittel (40) aus wenigstens einer Reihe von umfangsmäßig verteilten elastischen Sockeln (41) bestehen.

24. Zweimassen-Dämpfungsschwungrad nach Anspruch 23, **dadurch gekennzeichnet, dass** die elastischen Sockel (41) eine Aneinanderschichtung von Tellerfedern (42) umfassen.

25. Zweimassen-Dämpfungsschwungrad nach einem der Ansprüche 23 oder 24, **dadurch gekennzeichnet, dass** die Sockel (41) an einem Kranz (50) gelagert sind.

26. Zweimassen-Dämpfungsschwungrad nach Anspruch 25, **dadurch gekennzeichnet, dass** die Sockel (41) durch radiale Elastizität (43) in Löchern (49) des Kranzes (50) gehalten werden.

27. Zweimassen-Dämpfungsschwungrad nach einem der Ansprüche 2 bis 26, **dadurch gekennzeichnet, dass** das innere radiale Ende des radialen Arms (31) des Beabstandungsmittels (30) fest mit der zweiten Schwungmasse (12) verbunden ist, während das äußere Ende des besagten Arms (31) das Segment (32) trägt.

28. Zweimassen-Dämpfungsschwungrad nach einem der Ansprüche 1 bis 27, **dadurch gekennzeichnet, dass** die erste Schwungmasse (11) die Primärschwungmasse ist.
